# EUROPEAN PATENT APPLICATION

(11) **EP 1 814 043 A1**
(43) Date of publication of application: **01.08.2007**
(21) Application number: 07000438.7
(22) Date of filing: 10.01.2007
(51) Int. Cl.: G06F 17/30, G05B 19/418, G05B 19/409, G05B 23/02, G05B 9/02

(54) **Graphical interface for filtering information in a database, in particular alarm information**

(30) Priority: 24.01.2006 JP 2006014524
(71) Applicant: Yokogawa Electric Corporation, Tokyo 180-8750 (JP)
(72) Inventor: Sakata, Yasunori, Musashino-shi Tokyo 180-8750 (JP)
(74) Representative: Goddar, Heinz J.

(57) **Abstract**

There are provided a filtering device and a filtering method capable of easily filtering information, in particular alarm information in a process control system of a plant. A first display means (101) displays a plurality of icons representing elements of conditions and a designation area (53) for receiving the icons on a screen. A second display means (102) displays icons selected from the plurality of icons by a user's operation within the designation area (53) on the screen. A filtering means (103) filters information in accordance with conditions responsive to a combination of icons displayed within the designation area (53). A third display means (104) displays information filtered by the filtering means on the screen.

## Description

### FIELD OF THE INVENTION

The invention relates to a filtering device and a filtering method for filtering information in accordance with given conditions, and in particular, to a filtering device and a filtering method which are excellent in operability.

### BACKGROUND OF THE INVENTION

Production facilities of a plant are normally provided with a safety system for ensuring the safety of the plant, wherein the safety system generates alarms when detecting abnormalities in the plant. The generated alarms are displayed on a monitor of the safety system as a list view, whereby an operator grasps status of the alarms generated in the plant via a display of the monitor.

JP 2002-222012A discloses an invention wherein alarms of different categories are displayed on a single screen, and filtering of alarms is variably set.

However, as production facilities of a plant are complex, the number and the category of alarms increase, causing a problem in that the circumstances of the plant are hardly grasped by the list view display of the alarms alone. Accordingly, there is a system wherein conditions for filtering alarms to be displayed can be designated by a user. However, according to this system, since only one item can be designated as the filter condition, in the case where large volumes of alarms are generated, there arises a case where the alarms can not be sufficiently filtered. Further, the filter conditions are already defined by an developers' side of the system, the alarms can not be filtered based on the arbitrary item required by the user.

### SUMMARY OF THE INVENTION

It is an object of the invention to provide a filtering device and a filtering method capable of easily filtering information with an

The filtering device for filtering information in accordance with given conditions according to the first aspect invention is characterized in comprising a first display means for displaying a plurality of icons representing elements of conditions and a designation area for receiving the icons on a screen, a second display means for displaying icons selected from the plurality of icons by a user's operation within the designation area on the screen, and a filtering means for filtering information in accordance with conditions responsive to a combination of icons displayed within the designation area.

According to the filtering device, since information is filtered in accordance with conditions responsive to a combination of icons displayed within the designation area, information can be filtered easily and speedily.

The filtering device may comprise a third display means for displaying information filtered by the filtering means on the screen.

The filtering device may comprise a receiving means for receiving the elements of conditions and input or designation of the icons corresponding to the elements of conditions by a user. may

In this case, the user can freely define the elements of conditions.

The filtering method for filtering information in accordance with given conditions according to the second aspect of the invention is characterized in comprising a step of displaying a plurality of icons representing elements of conditions and a designation area for receiving the icons on a screen, a step of displaying icons selected from the plurality of icons by a user's operation within the designation area on the screen, and a step of filtering information in accordance with conditions responsive to a combination of icons displayed within the designation area.

According to the filtering method, since information is filtered in accordance with the conditions responsive to the combination of icons displayed within the designation area, information can be filtered easily and speedily.

The filtering method may comprise a step of displaying information filtered in the step of filtering information on the screen.

The filtering method may comprise a step of receiving the elements of conditions and input or designation of the icons corresponding to the elements of conditions by a user.

The filtering device for filtering information in accordance with given conditions according to the third aspect of the invention is characterized in comprising a first display means for displaying a plurality of icons representing elements of conditions on a screen, a second display means for displaying icons selected from the plurality of icons by a user's operation, and a filtering means for filtering information in accordance with conditions responsive to a combination of the selected icons.

According to the filtering device, since information is filtered in accordance with conditions responsive to the combination of the selected icons, information can be filtered easily and speedily.

The filtering method for filtering information in accordance with given conditions according to the fourth aspect of the invention is characterized in comprising a step of displaying a plurality of icons representing elements of conditions on a screen, a step of displaying icons selected from the plurality of icons by a user's operation, and a step of filtering information in accordance with conditions responsive to a combination of the selected icons.

According to the filtering method, since information is filtered in accordance with conditions responsive to the combination of the selected icons, information can be filtered easily and speedily.

According to the filtering device of the first aspect of the invention, since information is filtered in accordance with the conditions responsive to the combination of icons displayed within the designation area, information can be filtered easily and speedily.

According to the filtering method of the second aspect of invention, since information is filtered in accordance with the conditions responsive to the combination of icons displayed within the designation area, information can be filtered easily and speedily.

According to the filtering device of the third aspect of invention, since information is filtered in accordance with conditions responsive to the combination of the selected icons, information can be filtered easily and speedily.

According to the filtering method of the fourth aspect of invention, since information is filtered in accordance with conditions responsive to the combination of the selected icons information can be filtered easily and speedily.

### BRIEF DESCRIPTION OF THE DRAWINGS

Fig. 1 is a block diagram functionally showing an alarm information processing device according to the invention;
Fig. 2 is a block diagram showing a configuration of the alarm information processing device according to an embodiment of the invention;
Fig. 3 is a view exemplifying a display screen in a display unit;
Fig. 4 is a view showing examples of operations on the display screen;
Figs. 5(A) and 5(B) are views each showing a dialog for defining elements of conditions; and
Figs. 6(A) and 6(B) are views each showing another dialog for defining elements of conditions.

### BEST MODE FOR CARRYING OUT THE INVENTION

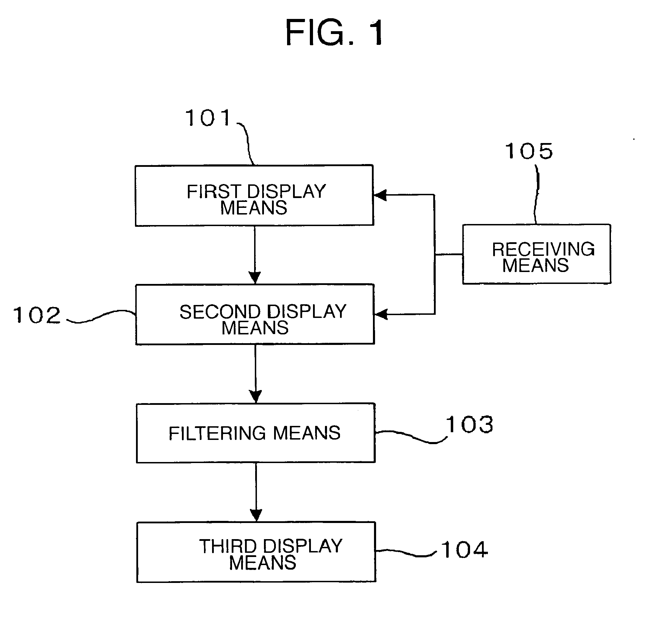

Fig. 1 is a block diagram functionally showing an alarm information processing device according to the invention.

In Fig. 1, a first display means 101 displays a plurality of icons representing elements of conditions and a designation area for receiving the icons on a screen. A second display means 102 displays icons selected from the plurality of icons by a user's operation within the designation area on the screen. A filtering means 103 filters information in accordance with conditions responsive to a combination of icons displayed within the designation area.

A third display means 104 displays information filtered by the filtering means on the screen.

A receiving means 105 receives the elements of conditions and input or designation of the icons corresponding to the elements of conditions by a user.

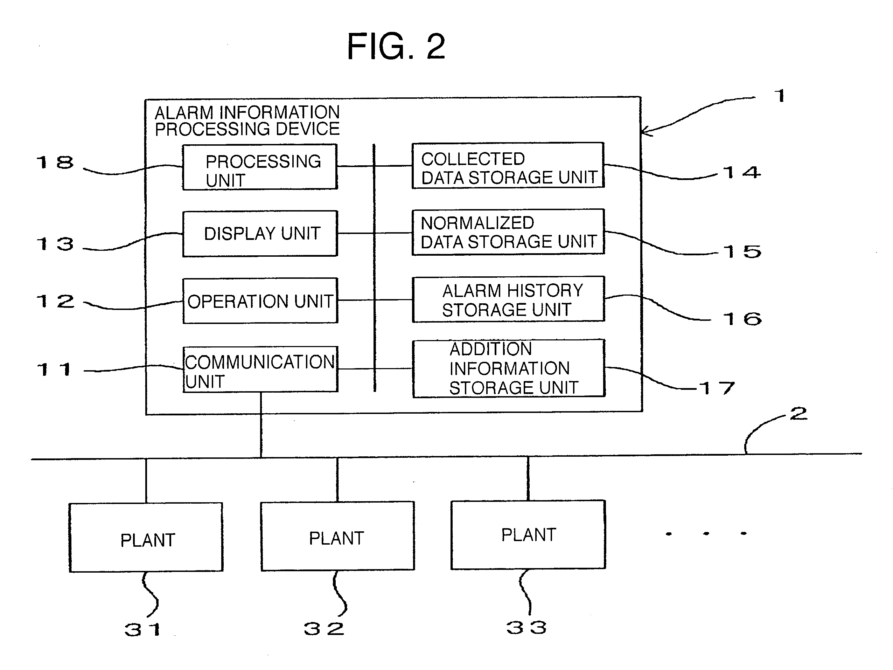

Described next with reference to Figs. 2 to 4 is an embodiment wherein the filtering device of the invention is applied to an alarm information processing device.

Fig. 2 is a block diagram showing a configuration of the alarm information processing device according to the embodiment of the invention.

As shown in Fig. 2, an alarm information processing device 1 of the invention comprises a communication unit 11 connected to a network 2, an operation unit 12 for receiving a user's operation, a display unit 13 for displaying alarm information relative to the user, a collected data storage unit 14 for storing data collected via the network 2, a normalized data storage unit 15 for storing normalized data, an alarm history storage unit 16 for storing an alarm history, an addition information storage unit 17 for storing additional data to be displayed while added to the alarm information, and a processing unit 18 for controlling various processing in the alarm information processing device 1.

As shown in Fig. 2, the alarm information processing device 1 receives messages from plants 31, 32, 33,... connected to the network 2. These messages from the plants are received by the alarm information processing device 1 via the communication unit 11, and they are sequentially stored in the collected data storage unit 14 as raw data. These messages comprise a plurality of mixed formats and they are stored in the collected data storage unit 14 in a state where a plurality of formats are mixed.

The normalization unit 18 acquires a given message from the collected data storage unit 14 and normalizes the message in accordance with a given logic.

In the normalization processing, the formats of a plurality of mixed messages are unified by executing a given logic. For example, in the case where in a specific system used in the plant where the importance of an alarm is defined by a numerical value, while in a different system where the importance of the alarm is indicated by a stepwise category of alarm, the importance of the alarm is unified into one scale. Further, the formats of data are unified into one format so Normalized data (message) generated by the normalization processing is stored in the normalized data storage unit 15.

Further, the processing unit 18 prepares the alarm history on the basis of the message stored in the normalized data storage unit 15. The processing unit 18 acquires normalized data from the normalized data storage unit 15 and decides as to whether the normalized data thus acquired is a message indicating alarm information or not. If the decision is affirmed, the processing unit 18 adds link information relative to addition data to be added to the alarm information, and stores the alarm information and the link information in the alarm history storage unit 16 as the alarm history.

Further, the processing unit 18 executes an alarm management procedure. The processing unit 18 decides as to whether an alarm state of the alarm information stored in the alarm history storage unit 16 is called off or not on the basis of the message stored in the normalized data storage unit 15. If this decision is affirmed, the processing unit 18 records calling off of the alarm state in the alarm history storage unit 16 as a part of the alarm history. Further, the processing unit 18 decides as to whether a generated alarm was recognized or not by the user. This decision is executed on the basis of the presence of the recognition operation of the alarm relative to the operation unit 12. The user who recognized generation of the alarm specifies the alarm relative to the operation unit 12, and is able to implement a given recognition operation for notifying the recognition of the alarm. Upon receiving the user's operation, the processing unit 18 records the fact of recognition of the specific alarm by the user in the alarm history storage unit 16 as a part of the alarm history.

The alarm history stored in the alarm history storage unit 16 is filtered in accordance with the user's instruction via the operation unit 12, and is displayed on the screen of the display unit 13. The display control in the display unit 13 is executed by the processing unit 18. Described hereinafter is a procedure for setting the filtering conditions.

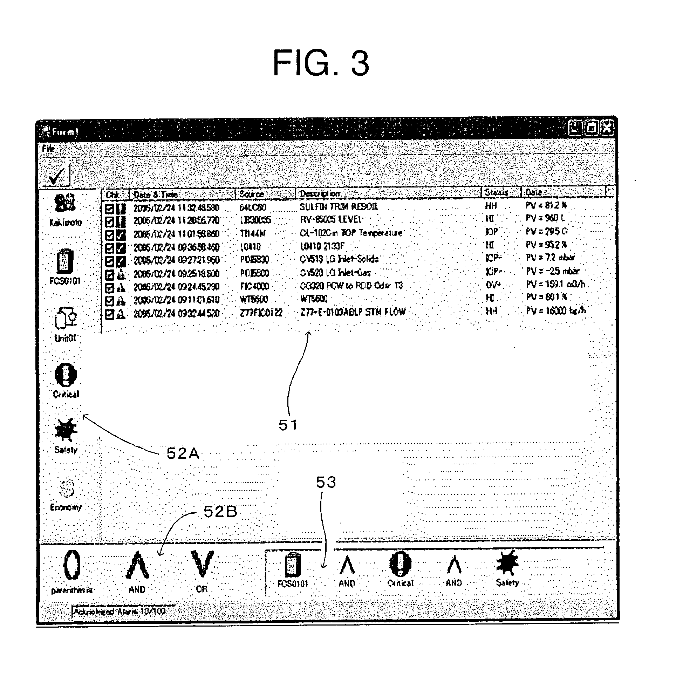

Fig. 3 is a view exemplifying a display screen in a display unit.

As shown in Fig. 3, there are provided, on the display screen, a display area 51 listing alarm messages (hereinafter referred to as list view area 51), element presenting areas 52A and 52B each presenting elements of conditions constituting filter conditions, and a designation area 53 for designating the filtering conditions.

The alarm messages are displayed as a list view on the list view area 51. A user can designate display items and display order of the alarm messages by operating the operation unit 12.

Icons representing the elements of conditions constituting the filtering conditions are disposed in the element presenting areas 52A and 52B.

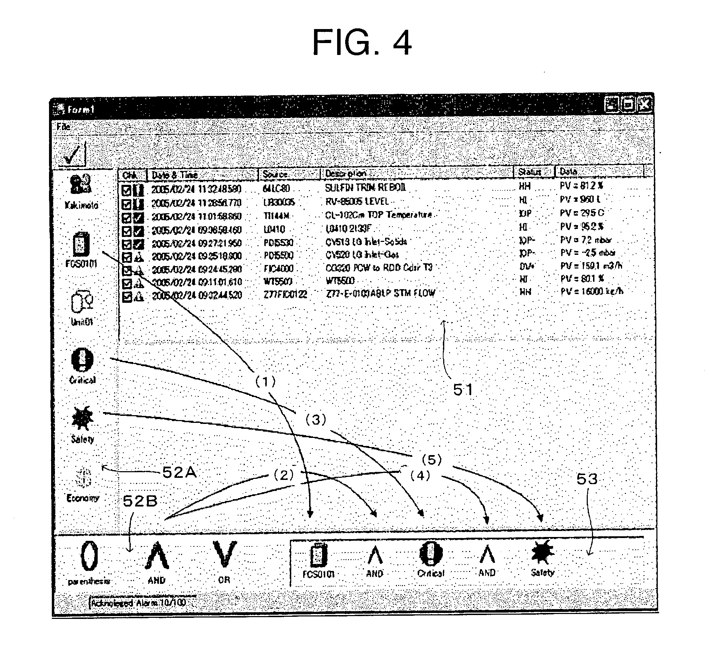

Fig. 4 is a view showing examples of operations on the display screen.

In the example of Fig. 4, the user selects an icon "FCS0101" in the element presenting area 52A using a mouth of the operation unit 12. As a result, only an alarm message relating to "FCS0101" is displayed on the list view area 51. Meanwhile, in this example, "FCS0101" means a tag designating a specific field equipment and so forth.

Then, when the icon "FCS0101" is subjected to drag toward the lower portion of a window, the designation area 53 is displayed. The icon "FCS0101" can be placed on the designation area 53 while the same is subjected to drag and drop (depicted by (1) of Fig. 4).

Subsequently, an icon "AND" in the element presenting area 52B is subjected to drag and drop toward the designation area 53 using the mouth (depicted by (2) of Fig. 4). Then, an icon "Critical" in the element presenting area 52A is subjected to drag and drop toward the designation area 53 (depicted by (3) of Fig. 4). As a result, only an alarm message relating to "FCS0101" and designated as "Critical" is displayed on the list view area 51.

Then, the icon "AND" in the element presenting area 52B is subjected to drag and drop toward the designation area 53 using the mouth (depicted by (4) of Fig. 4). Subsequently, an icon "Safety" in the element presenting area 52A is subjected to drag and drop toward the designation area 53 using the mouth (depicted by (5) of Fig. 4). As a result, only an alarm relevant to "Safety" of the alarm message relating to the icon "FCS0101" and designated as "Critical" is displayed in the list view area 51.

As mentioned above, according to the invention, when the user selects the icons from the element presenting areas 52A and the 52B, and places the selected icons on the designation area 53, the elements of conditions are combined so that an intended alarm message can be easily filtered from large volumes of alarm messages. Meanwhile, it is possible to prepare OR condition by use of an icon "OR" in the element presenting area 52B.

Further, according to the present embodiment, the user can define the elements of conditions per se which constitute the filter conditions.

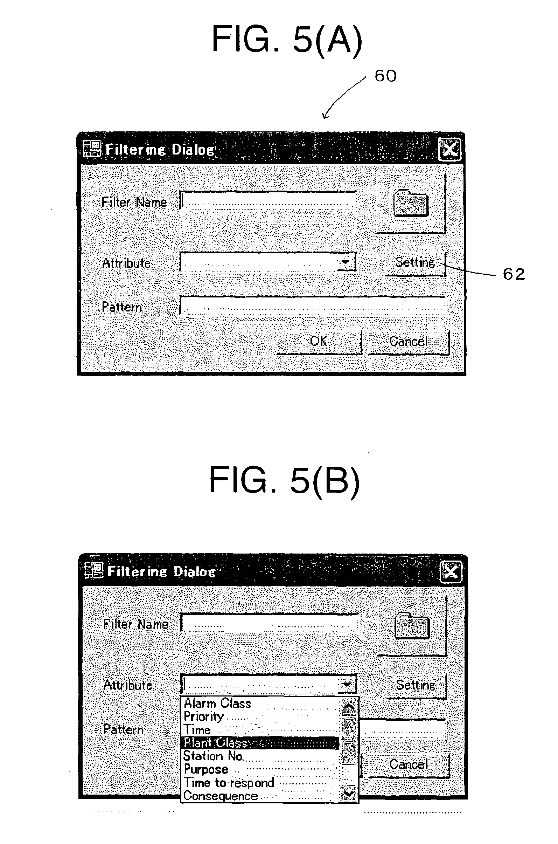

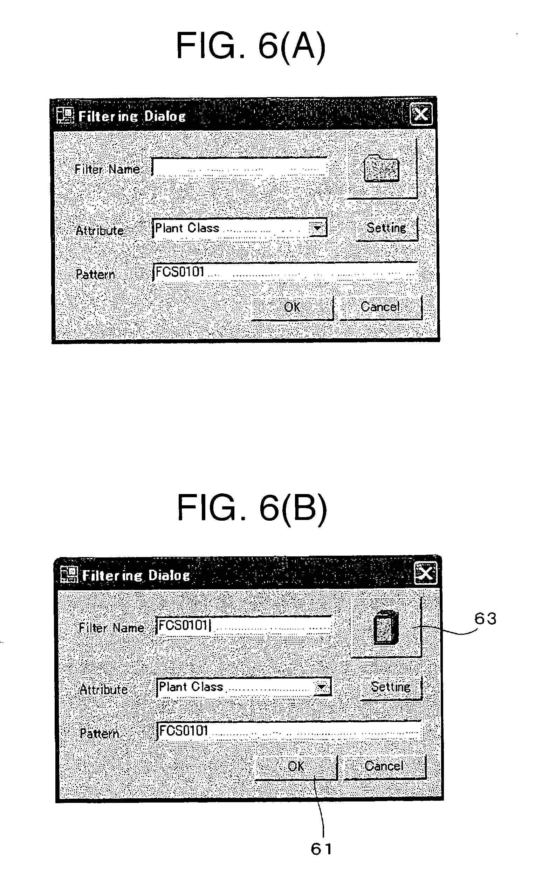

Figs. 5 and 6 show dialogs to be displayed on the display unit 13 for defining the elements of conditions. Procedures of operations for defining the elements of conditions are described hereinafter with reference to Figs. 5 and 6.

The user can call a filtering dialog 60 shown in Fig. 5(A) by a predetermined operation using the operation unit 12.

Then, as shown in Fig. 5(B), the user selects an item intended to be filtered. In this case, "Plant Class" is selected.

Then, as shown in Fig. 6(A), the user designates an element of condition of the filter conditions. In this example, "FCS0101" is designated.

Subsequently, as shown in Fig. 6(B),the user gives a name to the element of condition, and selects a format of the icon. When the user operates an "OK" button 61, the element of condition and an icon 63 corresponding thereto are registered. In this example, "FCS0101" is registered as the name of the element of condition, and the icon 63 corresponding to the element of condition is displayed in the element presenting area 52A.

Meanwhile, a "Setting" button 62 of the filtering dialog 60 (Fig. 5(A)) is a button for supporting an input. For example, if the user selects "Plant Class", and operates the "Setting" button 62, a dialog representing the plant class definition as a tree structure is displayed. If the plant class definition is selected on this dialog, the selected class is registered as the element of condition of the filter condition, and an icon corresponding thereto is to be displayed.

As mentioned above, according to this embodiment, it is possible to prepare new filter condition by freely combining a plurality of elements of conditions to prepare a new filter condition so that an intended alarm message can be easily extracted. Further, as the elements of conditions are added, the alarm messages which are displayed as a list view are dynamically varied so that the user can filter the alarm messages in response to the circumstances. Even in the case where large volumes of messages exist, the alarm message can be filtered easily and speedily in accordance with the user's intention.

Still Further, according to this embodiment, as shown in Figs. 5 and 6, the elements of conditions per se are defined by the user and they can be registered, they can be freely set in accordance with the convenience to use by the user.

As mentioned above, according to the invention, information can be filtered in accordance with the conditions responsive to the combination of icons displayed within the designation area.

The scope of application of the invention is not limited to the foregoing embodiment. The invention can be widely applied to a case where information is filtered in accordance with given conditions.

## Claims

1. A filtering device for filtering information in accordance with given conditions comprising:
a first display means (101) for displaying a plurality of icons representing elements of conditions and a designation area (53) for receiving the icons on a screen;
a second display means (102) for displaying icons selected from the plurality of icons by a user's operation within the designation area (53) on the screen; and
a filtering means (103) for filtering information in accordance with conditions responsive to a combination of icons displayed within the designation area (53).

2. The filtering device according to Claim 1, further comprising a third display means (104) for displaying information filtered by the filtering means (103) on the screen.

3. The filtering device according to Claim 1 or 2, further comprising a receiving means (105) for receiving the elements of conditions and input or designation of the icons corresponding to the elements of conditions by a user.

4. A filtering method for filtering information in accordance with given conditions comprising:
a step of displaying a plurality of icons representing elements of conditions and a designation area (53) for receiving the icons on a screen;
a step of displaying icons selected from the plurality of icons by a user's operation within the designation area (53) on the screen; and
a step of filtering information in accordance with conditions responsive to a combination of icons displayed within the designation area (53).

5. The filtering method according to Claim 4, further comprising a step of displaying information filtered in the step of filtering information on the screen.

6. The filtering method according to Claim 4 or 5, further comprising a step of receiving the elements of conditions and input or designation of the icons corresponding to the elements of conditions by a user.

7. A filtering device for filtering information in accordance with given conditions comprising:
a first display means (101) for displaying a plurality of icons representing elements of conditions;
a second display means (102) for displaying icons selected from the plurality of icons by a user's operation; and
a filtering means for (103) filtering information in accordance with conditions responsive to a combination of the selected icons.

8. A filtering method for filtering information in accordance with given conditions comprising:
a step of displaying a plurality of icons representing elements of conditions;
a step of displaying icons selected from the plurality of icons by a user's operation; and
a step of filtering information in accordance with conditions responsive to a combination of the selected icons.
